# EUROPEAN PATENT SPECIFICATION

(11) **EP 0 885 846 B1**
(45) Date of publication and mention of the grant of the patent: **19.09.2001**
(21) Application number: 98107482.6
(22) Date of filing: 24.04.1998
(51) Int. Cl.: C01G 49/14, C02F 1/52

(54) **Method for preparing ferric polysulfate solutions**
Verfahren zur Herstellung von Eisen (III) polysulfat Lösungen
Procédé de préparation de solutions de polysulfate ferrique

(30) Priority: 17.06.1997 JP 15994097; 14.01.1998 JP 584298
(43) Date of publication of application: 23.12.1998
(73) Proprietor: Nittetsu Mining Co., Ltd., Tokyo 100-0005 (JP)
(72) Inventor: Mikami, Yasuie, Tokyo 153-0041 (JP); Morita, Hakuya, Tokyo 190-0013 (JP)
(74) Representative: Hübner, Gerd, Dipl.-Phys.

(56) References cited:
- US-A- 4 707 349
- DATABASE WPI Section Ch, Week 9021 Derwent Publications Ltd., London, GB; Class E31, AN 90-162873 XP002077130 & SU 1 502 474 A (MINSEITOV S R) , 23 August 1989
- DATABASE WPI Section Ch, Week 8704 Derwent Publications Ltd., London, GB; Class D15, AN 87-027498 XP002077131 & JP 61 286228 A (NITTETSU MINING CO LTD) , 16 December 1986

## Description

The present invention relates to a method for preparing a ferric polysulfate solution having a basicity starting from, for instance, scraps formed during cutting, dust originated from converters (converter dust), blast furnace ash, neutralized sludge originated from waste water treatment and/or burned sludge thereof, i.e., iron metal, ferrous hydroxide, iron oxides.

As methods for preparing ferric polysulfate, there have been proposed various methods such as a method previously proposed by the applicant of this invention (inventors: Yasuie MIKAMI and Ippo TAKEI) and disclosed in Japanese Patent No. 842,085, in which ferrous sulfate is used and which comprises a step of oxidation while adjusting the molar ratio: SO₄/Fe in a ferrous sulfate solution to a level of not more than 1.5; a method disclosed in Japanese Patent Publication Hei-2-22012 (JP-B-222012), which comprises polymerizing sulfuric acid by adding H₂SO₄ to triiron tetraoxide in an amount of not less than 3 moles and less than 4 moles per one mole of triiron tetraoxide; and a method disclosed in Japanese Laid-open Hei-6-47205 (JP-A-647205) which comprises partially neutralizing ferric sulfate with diiron trioxide.

However, the method disclosed in Japanese Patent No. 842,085 suffers from such drawbacks that the resulting product has a high content of NO₃ since the oxidation is carried out using oxygen in the presence of a nitrogen oxide as a catalyst and that the method requires a long time for the preparation of the desired product. Moreover, triiron tetraoxide is used as a starting material in Japanese Patent Publication Hei-2-22012, but it has generally been known that triiron tetraoxide is soluble in hydrochloric acid, but is hardly soluble in sulfuric acid. For this reason, this method suffers from such a problem that it is, in fact, difficult to ensure a sufficiently high level of a hydroxyl value while polymerizing sulfuric acid by the addition of sulfuric acid to triiron tetraoxide in an amount of not less than 3 moles and less than 4 moles per mole of triiron tetraoxide at such a high temperature on the order of about 90 °C. Furthermore, the method disclosed in Japanese Laid-open Hei-6-47205 likewise suffers from a problem of low reproducibility in the quality of the resulting products and a problem of high cost of production thereof.

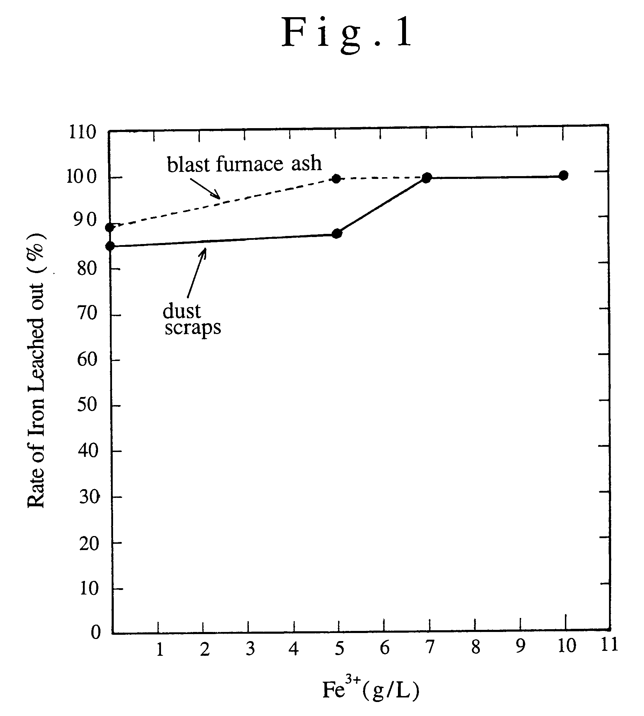

The inventors of this invention have conducted various studies, over a long period of time, to eliminate the foregoing problems associated with the conventional methods and as a result, have found out that:
(1) A ferric polysulfate solution having an Fe concentration ranging from 170 g/liter to 180 g/liter could be obtained when reacting a sulfuric acid solution containing trivalent iron with an iron-containing raw material such as converter dust, blast furnace ash, neutralized sludge, burned sludge thereof and/or scraps formed during cutting operations while controlling the molar ratio: SO₄/Fe to a level of not less than 1.50 and not more than 1.75, preferably not less than 1.60 and not more than 1.70;
(2) To prepare the foregoing solution, the reaction is carried out at a temperature of not less than 60 °C and not more than 95 °C, preferably not less than 65 °C and not more than 85 °C and particularly preferably not less than 70 °C and not more than 80 °C;
(3) The trivalent iron concentration of the basic sulfuric acid solution suitably ranges from 5 g/liter to 50 g/liter and this is because if the concentration is less than 5 g/liter, any desired effect cannot be achieved as will be seen from Fig.1 which shows the relation between the trivalent iron concentration and the leaching out rate of Fe, while if it exceeds 50 g/liter, the content of trivalent iron may constitute 1/4 to 1/3 of the whole ferric polysulfate solution having an Fe content ranging from 170 g/liter to 180 g/liter and this may impair the economical merit of the foregoing method and the product cannot be commercialized without difficulty;
(4) A solution obtained through the foregoing reaction carried out under such a condition that the molar ratio: SO₄/Fe is controlled to a level of not less than 1.50 and not more than 1.75 comprises free acid, but the addition of a divalent iron component such as ferrous sulfate to the solution and the subsequent oxidation of the solution permit the control of the molar ratio: SO₄/Fe to a level of not more than 1.50 and it has been confirmed that the flocculating agent thus prepared would have the same effect achieved by the conventional ferric polysulfate products.

The present invention has been developed on the basis of the aforementioned findings and according/litery, the inventors of this invention have succeeded in putting the foregoing method into practical use by dissolving, as an iron-containing raw material, converter dust, blast furnace ash, ash (or burned sludge) obtained by burning sludge originated from waste water treatment, neutralized sludge obtained by neutralizing sludge originated from waste water treatment (neutralized sludge) and/or metallic iron such as scraps formed during cutting or metal-processing, which comprise trivalent iron components and are substituted for ferrous sulfate conventionally used, by means of a sulfuric acid solution containing trivalent iron in an amount ranging from 5 g/liter to 50 g/liter.

Specific examples, which were carried out using the iron-containing raw materials described above are listed in the following Table 1. For each raw material, a conventional product is prepared using a solution listed in the upper row in each column of Table 1 and whose trivalent iron content is 0 g/liter, while a product according to the present invention is prepared using a solution listed in the lower row and whose trivalent iron content is 8 g/liter. As will be seen from the data listed in Table 1, the leaching out rate of Fe achieved when using the solution having a trivalent iron content of 8 g/liter is about 10% higher than that observed when the solution used is free of any trivalent iron.

**Table 1**

| Raw Material | Comp. of Raw Material | | | Comp. of Solution | | | Rate of Leaching (%) | Leaching Temp. (°C) |
|---|---|---|---|---|---|---|---|---|
| | T-Fe (%) | Fe²⁺ (%) | Fe³⁺ (%) | SO₄/Fe¹⁾ | T-SO₄ (g/liter) | Fe³⁺ (g/liter) | | |
| Converter Dust | 57.1 | 21.8 | 35.3 | 1.60 | 501 | 0 | 85 | 80 |
| | 57.1 | 21.8 | 35.3 | 1.60 | 501 | 8 | 98 | 80 |
| Blast Furnace Ash | 24.5 | 10.1 | 14.4 | 1.60 | 501 | 0 | 89 | 80 |
| | 24.5 | 10.1 | 14.4 | 1.60 | 501 | 8 | 99 | 80 |
| Burned Sludge²⁾ | 50.4 | 7.3 | 43.1 | 1.60 | 501 | 0 | 75 | 80 |
| | 50.4 | 7.3 | 43.1 | 1.60 | 501 | 8 | 90 | 80 |
| Scraps from Cutting | 98.5 | 0.5 | 0.5 | 1.60 | 501 | 0 | 85 | 80 |
| | 98.5 | 0.5 | 0.5 | 1.60 | 501 | 8 | 95 | 80 |
| Neutralized Sludge³⁾ | 16.4 | 0.5 | 15.9 | 1.60 | 501 | 0 | 90 | 80 |
| | 16.4 | 0.5 | 15.9 | 1.60 | 501 | 8 | 98 | 80 |

| | | | | | | | | |
|---|---|---|---|---|---|---|---|---|
| 1) Molar ratio: SO₄/Fe used during the reaction. | | | | | | | | |
| 2) Product obtained by burning sludge originated from waste water treatment. | | | | | | | | |
| 3) Product obtained by neutralizing sludge originated from waste water treatment. | | | | | | | | |

Fig.1 is a graph showing the relation between the trivalent iron concentration and the rate of iron leached out.

Fig.2 is a graph showing the effect of the trivalent iron concentration on the rate of iron-oxidation.

The details of the present invention will hereinafter be described on the basis of the following five specific Examples, but these Examples are given for simply illustrating the present invention and do not limit the technical scope of the present invention at all.

### Example 1

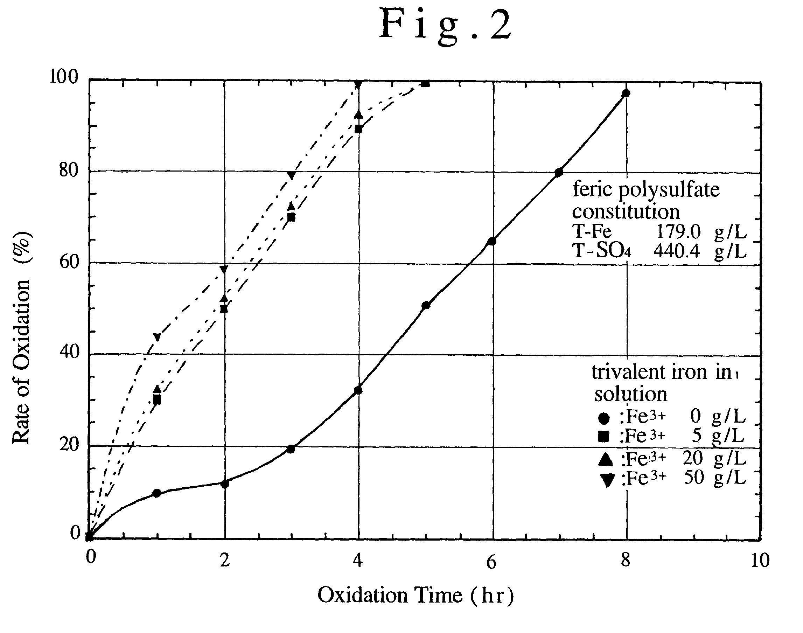

Scraps (171 g) originated from cutting, as a raw material, whose overall iron content was 98.5% and comprising not more than 0.5% of divalent iron, not more than 0.5% of trivalent iron and the balance of metallic iron was dissolved in a sulfuric acid solution having a trivalent iron concentration of 8 g/liter (having an overall amount of SO₄ of 485.5 g, maintained at 60 °C) while adjusting the whole volume of the solution was equal to one liter. This resulted in the formation of a solution having an overall iron concentration of 176.4 g/liter and an overall SO₄ concentration of 485.5 g/liter. To the resulting solution, there was added 263.0 g of ferrous sulfate (FeSO₄) followed by the oxidation thereof to thus give 1.3 liter of an ferric polysulfate solution having a basicity. The resulting solution was inspected for the storage stability and it was confirmed that the solution underwent any change even after it was stored over 6 months. Separately, the same procedures used above were repeated except for using a sulfuric acid solution substantially free of trivalent iron (the method according to Japanese Patent No. 842,085) to give a ferric polysulfate solution having an iron concentration of 160 g/liter. However, the latter method required a longer time for the oxidation as compared with the foregoing Example. The relation between the trivalent iron concentration and the rate of iron-oxidation was also examined. The results thus obtained are plotted on Fig.2. The data plotted on Fig.2 clearly indicate that the presence of trivalent iron in a concentration ranging from 5 g/liter to 50 g/liter permits the achievement of the same rate of oxidation within a time corresponding to about 0.5 to 0.6 time that required for the conventional method wherein the sulfuric acid solution is free of trivalent iron.

**Table 2**

| | Composition | | Specific Basicity Gravity | |
|---|---|---|---|---|
| | T-Fe(g/liter) | T-SO₄ (g/liter) | | |
| Conventional Product | 160 | 380 | 1.45 | 0.22 |
| Product of the Invention | 176.4 | 485.5 | 1.52 | 0.29 |

The foregoing ferric polysulfate solutions prepared according to these methods were evaluated by a jar test carried out using waste water discharged from a papermaking and pulping factory (COD 104 ppm, SS 65 ppm, pH 7.18). The results thus obtained are summarized in the following Table 3.

**Table 3**

| | Added Amount | T-Fe | pH | NaOH | COD | SS |
|---|---|---|---|---|---|---|
| | ppm | ppm | | ppm | ppm | ppm |
| Conventional | 272 | 30 | 6.25 | 0 | 72 | 35 |
| Solution | 453 | 50 | 5.31 | 16 | 43 | <10 |
| Solution of | 240 | 30 | 6.20 | 0 | 64 | 28 |
| the Invention | 400 | 50 | 5.37 | 16 | 40 | <10 |

Note: The final pH of the solution tested ranged from 6.2 to 6.5 and each supernatant collected after 10 minutes was used for the evaluation of each solution.

### Example 2

Converter dust (377 g), as a raw material, whose overall iron content was 57.1% (having a divalent iron content of 21.8% and a trivalent iron content of 35.3%) was dissolved in a sulfuric acid solution having a trivalent iron concentration of 8 g/liter (having an overall amount of SO₄ of 583 g, maintained at 60 °C) and it was confirmed that 98% of iron was leached out. The resulting solution was found to have an overall iron concentration of 145.9 g/liter and an overall SO₄ concentration of 388.7 g/liter and the whole volume of the resulting solution was found to be 1.5 liter. To the resulting solution, there was added 189.8 g of ferrous sulfate followed by the oxidation thereof to thus give 1.6 liter of a ferric polysulfate having an overall iron concentration of 180.3 g/liter and an overall SO₄ concentration of 443.5 g/liter. The resulting solution was subjected to the same test carried out in Example 1 using the same waste water discharged from a paper-making and pulping factory and the same results were obtained.

### Example 3

Blast furnace ash (902.5 g), as a raw material, whose overall iron content was 24.5% (having a divalent iron content of 10.1% and a trivalent iron content of 14.4%) was dissolved in a sulfuric acid solution having a trivalent iron concentration of 8 g/liter (having an overall amount of SO₄ of 583 g, maintained at 80 °C) and it was confirmed that 99% of iron was leached out. The resulting solution was found to have an overall iron concentration of 145.9 g/liter and an overall SO₄ concentration of 388.7 g/liter and the whole volume of the resulting solution was found to be 1.5 liter. To the resulting solution, there was added 189.8 g of ferrous sulfate followed by the oxidation thereof to thus give 1.6 liter of a ferric polysulfate having an overall iron concentration of 180.3 g/liter and an overall SO₄ concentration of 443.5 g/liter. The resulting solution was subjected to the same test carried out in Example 1 using the same waste water discharged from a paper-making and pulping factory and the same results were obtained.

### Example 4

Neutralized sludge originated from waste water treatment (1361.7 g), as a raw material, whose overall iron content was 16.4% (having a divalent iron content of 0.5% and a trivalent iron content of 15.9%) was dissolved in a sulfuric acid solution having a trivalent iron concentration of 8 g/liter (having an overall amount of SO₄ of 583 g, maintained at 80 °C) and it was confirmed that 98% of iron was leached out. The resulting solution was found to have an overall iron concentration of 145.9 g/liter and an overall SO₄ concentration of 388.7 g/liter and the whole volume of the resulting solution was found to be 1.5 liter. To the resulting solution, there was added 189.8 g of ferrous sulfate followed by the oxidation thereof and filtration through diatomaceous earth to thus give 1.4 liter of a ferric polysulfate having an overall iron concentration of 180.3 g/liter and an overall SO₄ concentration of 443.5 g/liter. The resulting solution was subjected to the same test carried out in Example 1 using the same waste water discharged from a paper-making and pulping factory and the same results were obtained.

### Example 5

Burned sludge originated from waste water treatment (377 g), as a raw material, whose overall iron content was 50.4% (having a divalent iron content of 7.3% and a trivalent iron content of 43.1%) was dissolved in a sulfuric acid solution having a trivalent iron concentration of 10 g/liter (having an overall amount of SO₄ of 544.9 g, maintained at 70 °C) and it was confirmed that 98% of iron was leached out. The resulting solution was found to have an overall iron concentration of 148.9 g/liter and an overall SO₄ concentration of 390.8 g/liter and the whole volume of the resulting solution was found to be 1.5 liter. To the resulting solution, there was added 190 g of ferrous sulfate followed by the oxidation thereof to thus give 1.6 liter of a ferric polysulfate having an overall iron concentration of 181.6 g/liter and an overall SO₄ concentration of 445.2 g/liter. The resulting solution was subjected to the same test carried out in Example 1 using the same waste water discharged from a paper-making and pulping factory and the same results were obtained.

## Claims

1. A method for preparing a ferric polysulfate solution having a basicity comprising a first step for dissolving dust originated from converters, blast furnace ash, neutralized sludge originated from waste water treatment, burned sludge thereof, or scraps formed during cutting operations in a sulfuric acid solution containing trivalent iron in an amount ranging from 5 g/liter to 50 g/liter, at a temperature ranging from 60 to 95 °C, while controlling the molar ratio: SO₄/Fe in the resulting solution to a level of not less than 1.5 and not more than 1.75; and a second step for oxidizing the resulting solution.

2. The method for preparing a ferric polysulfate solution according to claim 1 wherein divalent iron or metallic iron is added to the solution prior to the initiation of the second step.

## Patentansprüche

1. Verfahren zur Herstellung einer Ferri-Polysulfat-Lösung mit einer Basizität, umfassend einen ersten Schritt zur Auflösung von durch Konverter erzeugtem Staub, Hochofenasche, durch Abwasserbehandlung entstandenem, neutralisiertem Schlamm, verbranntem Schlamm davon, oder während Schneidvorgängen gebildeten Bruchstücken, in einer Schwefelsäurelösung, die 3-wertiges Eisen in einer Menge im Bereich von 5 g/l bis 50 g/l enthält, bei einer von 60 bis 95° C reichenden Temperatur, während das molare Verhältnis: SO₄/Fe in der entstandenen Lösung auf ein Niveau von nicht weniger als 1,5 und nicht mehr als 1,75 eingestellt wird; und einen zweiten Schritt zum Oxidieren der entstandenen Lösung.

2. Verfahren zur Herstellung einer Ferri-Polysulfat-Lösung nach Anspruch 1, wobei 2-wertiges Eisen oder metallisches Eisen zu der Lösung vor der Einleitung des zweiten Schritts hinzugefügt wird.

## Revendications

1. Procédé pour la préparation d'une solution de polysulfate ferrique possédant une basicité comprenant une première étape consistant à dissoudre la poussière provenant de convertisseurs, la cendre de haut fourneau, la boue neutralisée provenant d'un traitement des eaux usées, la boue brûlée de celui-ci, ou les rebuts formés pendant les opérations de coupe, dans une solution d'acide sulfurique contenant du fer trivalent en une quantité allant de 5 g/litre à 50 g/litre, à une température allant de 60°C à 95°C, tout en régulant le rapport molaire : SO₄/Fe, dans la solution résultante, à une valeur pas inférieure à 1,5 et ne dépassant pas 1,75 ; et une seconde étape consistant à oxyder la solution résultante.

2. Procédé pour la préparation d'une solution de polysulfate ferrique selon la revendication 1, dans lequel on ajoute du fer divalent ou du fer métallique à la solution avant le début de la deuxième étape.
